# DEMANDE DE BREVET EUROPEEN

(11) **EP 1 801 486 A1**
(43) Date de publication de la demande: **27.06.2007**
(21) Numéro de dépôt: 06291964.2
(22) Date de dépôt: 18.12.2006
(51) Int. Cl.: F16L 55/04

(54) **Atténuateur de bruit pour flexible hydraulique, flexible qui en est porvu et système de direction assistée l'incorporant**

(30) Priorité: 20.12.2005 FR 0512968
(71) Demandeur: Hutchinson, 75008 Paris (FR)
(72) Inventeur: Binter, Christophe, 45290 Nogent/Vernisson (FR)
(74) Mandataire: Bolinches, Michel Jean-Marie

(57) **Abrégé**

La présente invention concerne un atténuateur de bruit destiné à transférer un fluide liquide de type huileux à l'intérieur d'un flexible de transmission hydraulique, un tel flexible et un système piloté de direction assistée pour véhicule automobile l'incorporant.

Un atténuateur de bruit (3) selon l'invention comprend au moins un tuyau souple (4) non métallique qui est ouvert en ses deux extrémités, il est tel que ledit tuyau présente une paroi poreuse qui est perméable audit fluide, de sorte que ce dernier traverse radialement ladite paroi sensiblement sur toute la surface cylindrique de celle-ci.

Un flexible (1) selon l'invention, destiné à équiper un système piloté de direction assistée pour véhicule automobile, comporte au moins un manchon extérieur souple (2) équipé de deux raccords d'entrée et de sortie respectivement connectés à une source dudit fluide et à un organe commandé, ledit flexible étant pourvu dudit atténuateur de bruit (3) à l'intérieur et à distance dudit manchon.

## Description

La présente invention concerne un atténuateur de bruit destiné à transférer un fluide liquide de type huileux à l'intérieur d'un flexible de transmission hydraulique, un tel flexible et un système piloté de direction assistée pour véhicule automobile l'incorporant.

D'une manière générale, un système de direction assistée hydraulique d'un véhicule automobile comprend notamment un circuit haute pression avec une pompe hydraulique qui alimente en fluide sous pression une servo-valve qui est reliée à un dispositif à crémaillère d'un système de direction des roues directrices du véhicule. La pompe hydraulique peut être mue le plus souvent par une courroie entraînée par le moteur du véhicule, ou autrement par un moteur électrique ; on parle alors dans ce dernier cas d'une électro-pompe. Un flexible à transmission hydraulique relie la pompe hydraulique à la servo-valve, et ce flexible est constitué de tronçons souples formés de tuyaux et de tronçons rigides formés de tubes ou raccords métalliques.

Un tel flexible est usuellement pourvu d'au moins un atténuateur de bruit (quelquefois désigné dans la technique sous le nom de « tuner ») qui est monté co-axialement à l'intérieur d'un manchon souple typiquement à base de caoutchouc délimitant extérieurement le flexible, afin d'atténuer les pulsations de fonctionnement pouvant se répercuter par exemple à la colonne de direction reliée à la servo-valve et ainsi remonter jusqu'à l'habitacle du véhicule.

De manière connue, l'atténuateur de bruit peut être constitué d'une gaine souple métallique qui est spiralée hélicoïdalement, comme décrit par exemple dans le document EP-A-751 337, ou bien d'un tuyau souple en matière plastique qui est percé d'orifices traversants en des emplacements prédéterminés, comme décrit par exemple dans le document US-A-5 172 729. Dans ces deux cas, le fluide huileux circulant sous pression et à température généralement supérieure à la température ambiante et pouvant atteindre une centaine de degrés Celsius, traverse radialement la gaine par des rainures formées entre les spires qu'elle présente ou bien le tuyau par lesdits orifices, pour s'écouler dans l'espace annulaire formé entre la face externe de ladite gaine ou dudit tuyau et la face interne dudit manchon.

Généralement, l'atténuateur est inséré librement à l'intérieur du flexible par l'une des extrémités de celui-ci, soit celle qui correspond à l'entrée du fluide, soit celle qui correspond à sa sortie, et un raccord est prévu pour fixer cette extrémité du flexible à une extrémité de l'atténuateur, alors que l'autre extrémité de ce dernier est montée libre ou flottante à l'intérieur du flexible.

Un inconvénient majeur des atténuateurs de type gaine métallique spiralée réside dans le détachement par frottement de particules métalliques de la gaine lors de transfert du fluide et la migration en résultant, qui représente un risque de pollution du circuit hydraulique.

Quant aux atténuateurs de type tuyau souple perforé en matière plastique, ils présentent notamment l'inconvénient de n'être réellement efficaces pour l'atténuation des ondes sonores que pour quelques fréquences particulières et au voisinage de celles-ci.

Un but de la présente invention est de proposer un atténuateur de bruit destiné à transférer un fluide liquide de type huileux à l'intérieur d'un flexible de transmission hydraulique, ledit atténuateur comprenant au moins un tuyau souple non métallique qui est ouvert en ses deux extrémités, qui permette de remédier aux inconvénients précités.

A cet effet, un atténuateur selon l'invention est tel que ledit tuyau présente une paroi poreuse qui est perméable audit fluide, de sorte que ce dernier traverse radialement ladite paroi sensiblement sur toute la surface cylindrique de celle-ci.

D'une manière surprenante, la Demanderesse a découvert que la porosité uniforme qui caractérise la paroi perméable de cet atténuateur selon l'invention permet de conférer à ce dernier une efficacité d'atténuation des ondes sonores dans une plage élargie de fréquences incluant non seulement les basses fréquences mais encore des fréquences plus élevées, en comparaison des seules quelques fréquences particulières atténuées par les tuyaux plastiques perforés de l'art antérieur.

On notera également que le matériau non métallique utilisé pour cet atténuateur, qui peut être un matériau plastique ou élastomère adapté pour supporter les contraintes de température et de pression élevées dans ledit tuyau, permet d'éviter le risque de pollution précité du circuit hydraulique l'incorporant dû à l'utilisation d'une gaine métallique.

De préférence, ledit tuyau est constitué d'un matériau plastique souple qui est à base d'au moins un polymère thermoplastique et qui présente un point de ramollissement suffisamment élevé eu égard à la température du fluide circulant dans ce tuyau, ce point de ramollissement étant choisi de préférence supérieur à 80° C et, à titre encore plus préférentiel, supérieur à 150° C.

Selon une autre caractéristique de l'invention, ladite paroi est avantageusement de type macroporeuse, étant définie par des cavités ou cellules ouvertes qui sont raccordées les unes aux autres de sorte à former un passage pour ledit fluide à travers ladite paroi, lesdites cavités étant présentes dans ladite paroi selon une fraction volumique comprise entre 1 % et 50 %, de préférence entre 5 % et 30 %, et présentant une taille moyenne supérieure à 20 µm et, de préférence, comprise entre 30 µm et 100 µm.

La Demanderesse a pu vérifier que ces deux caractéristiques combinées de fraction volumique et de taille, qui caractérisent préférentiellement la porosité de la paroi cylindrique de l'atténuateur selon l'invention, sont particulièrement bien adaptées pour permettre une fuite radiale homogène, sur toute la longueur dudit tuyau, du fluide liquide huileux circulant sous haute pression (typiquement d'au moins 100 bars) et à haute température (par exemple à 80° C).

Selon un exemple préférentiel de réalisation de l'invention, ladite paroi est formée d'une matière thermoplastique de structure poreuse à base d'au moins un polytétrafluoroéthylène (PTFE).

Selon des variantes de réalisation de l'invention, ladite paroi peut être à base d'un polyfluoroalkyle (PFA) poreux, ou bien à base d'un polyamide aliphatique poreux.

On notera en outre que ledit tuyau de l'atténuateur selon l'invention présente avantageusement une épaisseur comprise entre 0,1 mm et 2,5 mm, et un diamètre externe compris entre 5 mm et 15 mm le rendant adapté pour être logé à l'intérieur d'un flexible de transmission hydraulique pouvant notamment équiper un circuit de direction assistée.

Un flexible de transmission hydraulique selon la présente invention est destiné à équiper un système piloté de direction assistée pour véhicule automobile, et ledit flexible comporte au moins un manchon extérieur souple équipé de deux raccords d'entrée et de sortie respectivement connectés à une source d'un fluide liquide de type huileux sous pression, telle qu'une pompe hydraulique, et à un organe commandé, tel qu'une servo-valve.

Selon l'invention, ledit flexible est pourvu, à l'intérieur et à distance dudit manchon, d'au moins un atténuateur de bruit selon l'invention tel que défini ci-dessus.

Selon un mode particulier de réalisation de l'invention, ledit manchon est emmanché sur un embout d'un tube métallique dans lequel est logé un insert tubulaire qui reçoit l'extrémité libre dudit atténuateur, ledit insert pouvant comporter une première partie d'extrémité logée dans ledit embout dont il est solidaire par emmanchement conique, et une seconde partie extérieure audit embout et qui est conformée en cheminée crantée apte à recevoir par montage à force ledit atténuateur.

Selon une autre caractéristique de l'invention, l'une des extrémités dudit atténuateur est fixée directement ou indirectement au raccord d'entrée ou de sortie dudit flexible, et l'extrémité libre dudit atténuateur peut être par exemple équipée d'un dispositif de positionnement pour assurer le centrage de cette extrémité libre à l'intérieur dudit manchon.

Un système piloté de direction assistée pour véhicule automobile selon l'invention est du type comprenant un circuit haute pression qui comporte un flexible de transmission hydraulique selon l'invention tel que défini ci-dessus qui est monté via ses extrémités respectives entre une pompe hydraulique et une servo-valve, laquelle est reliée à un dispositif à crémaillère dudit système de direction.

D'autres caractéristiques, avantages et détails de la présente invention ressortiront à la lecture de la description suivante d'un exemple de réalisation de l'invention, donné à titre illustratif et non limitatif, ladite description étant réalisée en référence avec les dessins joints, parmi lesquels :
les figures 1 à 4 sont des vues schématiques en coupe longitudinale, avec arrachements partiels, de quatre modes de réalisation de l'invention illustrant le positionnement d'un atténuateur de bruit à l'intérieur d'un flexible selon l'invention,
la figure 5 est une vue, à plus grande échelle et en coupe longitudinale, d'un exemple d'un raccord de flexible selon l'invention, et
les figures 6a à 6e illustrent, selon une échelle agrandie, les phases successives d'un procédé de fabrication d'un tel raccord selon l'invention comportant un tube métallique dans lequel est fixé un insert.

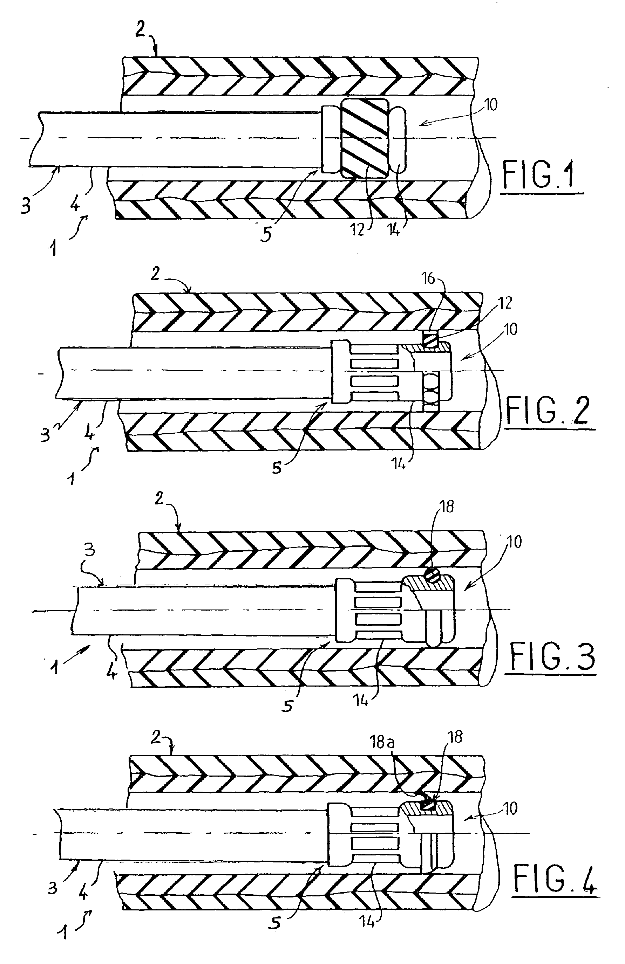

Les figures 1 à 4 illustrent chacune un flexible 1 de transmission hydraulique de type haute pression, qui est destiné à équiper un système piloté de direction assistée pour véhicule automobile. Le flexible 1 comporte un manchon extérieur souple 2 équipé de deux raccords d'entrée et de sortie (non visibles) qui sont respectivement connectés à une pompe hydraulique et à une servo-valve. Ce flexible 1 est pourvu, à l'intérieur et à distance du manchon 2, d'un atténuateur de bruit 3 selon l'invention qui est monté co-axialement à ce manchon 2 et qui comporte un tuyau souple 4 non métallique à paroi poreuse sur toute la surface cylindrique du tuyau 4.

Selon un exemple préférentiel de réalisation de l'invention, le tuyau 4 est constitué d'un matériau thermoplastique macroporeux à base d'un PTFE poreux de dénomination commerciale « PERMEON », et l'on a pu vérifier que ce matériau macroporeux permet une fuite radiale homogène du fluide liquide huileux circulant dans le tuyau 4 sous haute pression et à haute température, sur toute la longueur de ce tuyau 4.

Une extrémité du tuyau 4 est fixée au raccord d'entrée du flexible 1, alors que son autre extrémité libre 5 est positionnée à l'intérieur du manchon 2, soit librement, soit via un dispositif de positionnement 10 adapté pour centrer et maintenir en place l'extrémité libre 5.

Selon un mode de réalisation de l'invention illustré à la figure 1, le dispositif de positionnement 10 est constitué d'une bague 12 en un matériau élastiquement déformable. Cette bague 12 est rapportée sur une tubulure 14 qui est fixée autour de l'extrémité libre 5 du tuyau 4, par sertissage, surmoulage ou collage par exemple. Le diamètre externe de cette bague 12 est légèrement inférieur au diamètre interne du flexible 1.

Selon une variante de ce mode de réalisation illustrée à la figure 2, la bague 12 est traversée axialement par des ouvertures 16 qui sont par exemple réalisées sous la forme d'encoches prévues à la périphérie de la bague 12 et régulièrement réparties autour de celle-ci.

Selon un autre mode de réalisation de l'invention illustré à la figure 3, la bague 12 est remplacée par au moins un joint torique 18 rapporté autour de la tubulure 14. L'utilisation du joint torique 18 est avantageux lorsqu'il n'y a pas suffisamment de jeu entre le tuyau 4 et le manchon 2.

En variante de ce mode de réalisation, le joint torique 18 peut être un joint racleur avec une lèvre 18a, comme cela est illustré sur la figure 4. L'utilisation d'un joint racleur est avantageuse pour ajuster le contact avec la face interne du manchon 2, dans le cas où ce dernier est amené à subir des variations importantes en expansion volumétrique. D'une manière générale, la tubulure 14 sur laquelle est rapportée la bague 12 ou le joint torique 18 s'étend axialement au-delà de l'extrémité libre 5 du tuyau 4, le diamètre interne de cette tubulure 14 pouvant être calibré.

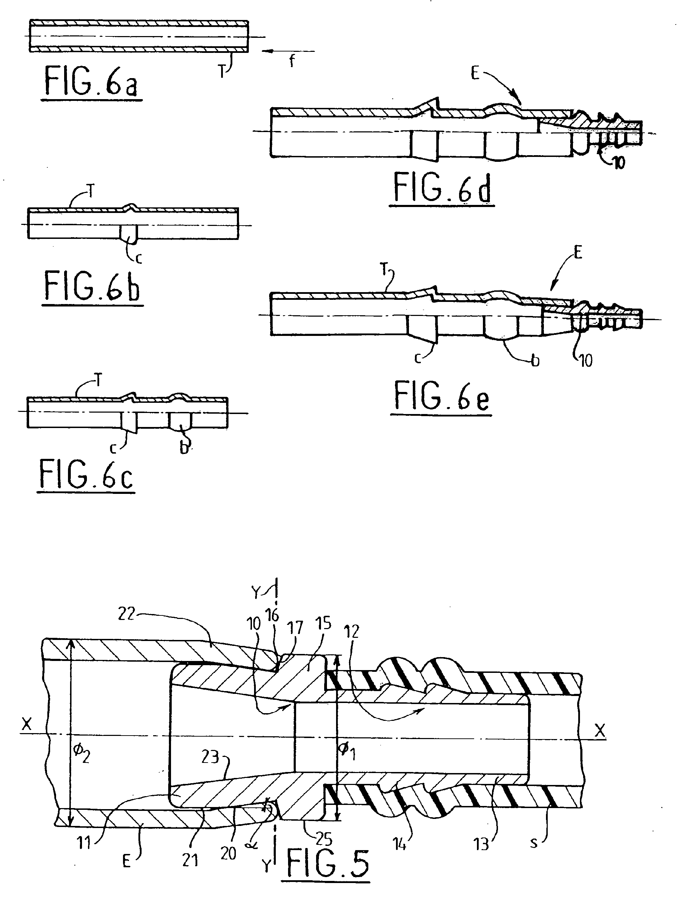

L'extrémité du tuyau 4 située du côté de l'entrée du fluide peut être assemblée au flexible 1 selon un procédé et un dispositif du type de ceux qui sont décrits en référence aux figures 5 et 6a-6e.

Un atténuateur s selon l'invention est illustré à la figure 5, pour son extrémité qui est destinée à être raccordée au flexible via un embout E et un insert 10 (le manchon extérieur souple du flexible n'est pas représenté à la figure 5).

Comme illustré aux figures 6a à 6e, on façonne l'embout E à partir d'un tube métallique droit T étiré par refoulement de matière, à l'aide d'un outillage comportant un poinçon qui pousse le tube T à son extrémité dans le sens de la flèche f (figure 6a) et d'une matrice qui maintient le tube T au cours de sa déformation, le poinçon et la matrice (non représentés) comportant des logements de formes conjuguées de celles de l'embout E définitif. On réalise d'abord, au cours d'une première passe, la collerette c (figure 6b) puis, au cours d'une deuxième passe, le bulbe b (figure 6c) puis, en conservant la même matrice que celle mise en oeuvre dans la passe qui vient d'être décrite - mais à l'aide d'un poinçon différent, on met en place dans l'extrémité libre de l'embout E du tube T un insert 10 (figure 6d) préalablement usiné comme décrit ci-après.

L'insert 10, en matière métallique ou en matière plastique dure et de forme générale tubulaire, est choisi en fonction de l'atténuateur de bruit s dont on souhaite équiper le flexible, et l'on provoque la déformation de l'extrémité libre de l'embout E suivant un emmanchement conique de maintien à étanchéité de l'insert 10 dans l'embout E (figure 6e), lors du déplacement axial du poinçon qui porte l'insert 10.

Comme illustré à la figure 5, l'insert 10 présente une première partie 11 prévue pour être logée dans l'embout E et qui est usinée sur sa surface externe suivant un tronc de cône 20 dont l'angle α par rapport à la surface cylindrique de l'extrémité 21 de ladite partie 11 est, par exemple, de l'ordre de 7°, angle qui correspond à celui de l'emmanchement conique de maintien à étanchéité de l'insert 10 dans l'embout E dont l'extrémité libre 22 est déformée lors du montage décrit ci-dessus.

L'insert 10 présente en outre une seconde partie 12, qui est extérieure à l'embout E après assemblage et qui comporte une cheminée 13 munie sur sa surface extérieure de crans 14 d'accrochage du tuyau souple s, la partie 12 comprenant également une collerette 15 qui ménage, en regard de la première partie 11, une face de butée 16 contre la tranche d'extrémité 17 de l'embout E, face de butée 16 qui est inclinée d'un angle de l'ordre de 15 à 20° sur le plan montré en YY et qui est perpendiculaire à l'axe longitudinal XX de l'insert 10.

Dans sa première partie 11, logée à l'intérieur de l'embout E, l'insert 10 est en outre usiné suivant une surface interne tronconique 23 dont la pente est sensiblement celle de l'emmanchement conique externe (ici de l'ordre de 7°), pour atténuer au mieux les pertes de charge dues aux diminutions successives du diamètre intérieur des sections de passage du fluide circulant dans le flexible.

Pour faciliter le montage du manchon extérieur souple du flexible sur l'embout E muni de l'insert 10, le diamètre externe φ₁ de la collerette 15 est prévu inférieur au diamètre φ₂ de l'extrémité libre de l'embout E, la présence d'un congé 25 sur la face de la collerette 15 opposée à celle de butée 16 facilitant encore ce montage de ce manchon.

On notera que la description qui vient d'être faite en relation avec les figures 1 à 6e n'est nullement limitative pour la fixation d'un atténuateur selon la présente invention à l'intérieur d'un flexible de transmission hydraulique, et que la présente invention s'étend à tout autre mode de fixation de l'atténuateur au flexible l'incorporant.

## Revendications

1. Atténuateur de bruit (3, s) destiné à transférer un fluide liquide de type huileux à l'intérieur d'un flexible (1) de transmission hydraulique, ledit atténuateur comprenant au moins un tuyau souple (4) non métallique qui est ouvert en ses deux extrémités, **caractérisé en ce que** ledit tuyau présente une paroi poreuse qui est perméable audit fluide, de sorte que ce dernier traverse radialement ladite paroi sensiblement sur toute la surface cylindrique de celle-ci.

2. Atténuateur de bruit (3, s) selon la revendication 1, **caractérisé en ce que** ladite paroi est de type macroporeuse, étant définie par des cavités ouvertes qui sont raccordées les unes aux autres de sorte à former un passage pour ledit fluide à travers ladite paroi, lesdites cavités étant présentes dans ladite paroi selon une fraction volumique comprise entre 1 % et 50 % et présentant une taille moyenne supérieure à 20 µm.

3. Atténuateur de bruit (3, s) selon la revendication 2, **caractérisé en ce que** lesdites cavités sont présentes dans ladite paroi selon une fraction volumique comprise entre 5 % et 30 % et présentent une taille moyenne comprise entre 30 µm et 100 µm.

4. Atténuateur de bruit (3, s) selon une des revendications 1 à 3, **caractérisé en ce que** ladite paroi est formée d'une matière thermoplastique de structure poreuse à base d'au moins un polytétrafluoroéthylène (PTFE).

5. Atténuateur de bruit (3, s) selon une des revendications 1 à 3, **caractérisé en ce que** ladite paroi est à base d'un polyfluoroalkyle (PFA) poreux.

6. Atténuateur de bruit (3, s) selon une des revendications 1 à 3, **caractérisé en ce que** ladite paroi est à base d'un polyamide aliphatique poreux.

7. Atténuateur de bruit (3, s) selon une des revendications précédentes, **caractérisé en ce que** ledit tuyau (4) présente une épaisseur comprise entre 0,1 mm et 2,5 mm.

8. Atténuateur de bruit (3, s) selon une des revendications précédentes, **caractérisé en ce que** ledit tuyau (4) présente un diamètre externe compris entre 5 mm et 15 mm.

9. Flexible (1) de transmission hydraulique destiné à équiper un système piloté de direction assistée pour véhicule automobile, ledit flexible comportant au moins un manchon extérieur souple (2) équipé de deux raccords d'entrée et de sortie respectivement connectés à une source d'un fluide liquide de type huileux sous pression, telle qu'une pompe hydraulique, et à un organe commandé, tel qu'une servo-valve, ledit flexible étant pourvu, à l'intérieur et à distance dudit manchon, d'au moins un atténuateur de bruit (3, s) destiné à transférer ledit fluide, **caractérisé en ce que** ledit ou chaque atténuateur est tel que défini à l'une des revendications précédentes.

10. Flexible (1) selon la revendication 9, **caractérisé en ce que** ledit manchon (2) est emmanché sur un embout (E) d'un tube métallique (T) dans lequel est logé un insert tubulaire (10) qui reçoit une extrémité libre dudit atténuateur (s), ledit insert comportant une première partie d'extrémité (11) logée dans ledit embout dont il est solidaire par emmanchement conique, et une seconde partie (12) extérieure audit embout et qui est conformée en cheminée (13) crantée apte à recevoir par montage à force ledit atténuateur.

11. Flexible (1) selon la revendication 9 ou 10, **caractérisé en ce que** l'une des extrémités dudit atténuateur (3) est fixée directement ou indirectement au raccord d'entrée ou de sortie dudit flexible (3), et **en ce que** l'autre extrémité libre (5) dudit atténuateur (3) est équipée d'un dispositif de positionnement (10) pour assurer le centrage de cette extrémité libre (5) à l'intérieur dudit manchon (2).

12. Système piloté de direction assistée pour véhicule automobile, comprenant un circuit haute pression qui comporte un flexible de transmission hydraulique (1) qui est monté via ses extrémités respectives entre une pompe hydraulique et une servo-valve, laquelle est reliée à un dispositif à crémaillère dudit système de direction, **caractérisé en ce que** ledit flexible est tel que défini à l'une des revendications 9 à 11.
